# EUROPEAN PATENT APPLICATION

(11) **EP 4 722 046 A2**
(43) Date of publication of application: **08.04.2026**
(21) Application number: 26152734.5
(22) Date of filing: 17.02.2021
(51) Int. Cl.: B60R 11/04

(54) **PERIPHERAL FUNCTIONAL ASSEMBLY FOR MOTOR VEHICLES**

(62) Divisional of application: 21382124.2
(71) Applicant: Ficosa Automotive, S.L.U., 08232 Viladecavalls (ES)
(72) Inventor: FERRÉ ALABERN, Eduard, 08232 Viladecavalls (ES); MENDOZA VICIOSO, José, 08232 Viladecavalls (ES)
(74) Representative: ZBM Patents - Zea, Barlocci & Markvardsen

(57) **Abstract**

The peripheral functional assembly (100) comprises a base bracket (110) to be fixedly attached to a motor vehicle and an electric actuator assembly (120) pivotally mounted to the base bracket (110). The electric actuator assembly (120) comprises driving means (130) for pivoting to the base bracket (110). The electric actuator assembly (120) also comprises a cover assembly (140) enclosing the driving means (130) immediately adjacent the driving means (130). The cover assembly (140) is also configured for supporting a functional element (200) such as an electrical device.

## Description

The present disclosure relates in general to peripheral functional assemblies such as winglets intended to be used with electronic or optical devices such as mirrors, lenses, lights, radars, cameras, etc. in motor vehicles.

### BACKGROUND

Vehicle peripheral functional assemblies are typically mounted outside a motor vehicle for example to allow the driver to see or monitor the outside of the vehicle while driving. Peripheral functional assemblies, such as for example winglets, rear-view mirrors, etc. are provided with an actuator that includes driving means. The driving means usually include an electric motor that is arranged within a housing and are intended for driving the functional assembly in rotation around a fixed part of a motor vehicle between, for example, non-driving and driving positions, relative to the motor vehicle. In a non-driving position, the peripheral functional assembly is folded inwards when the vehicle is parked for protection purposes.

EP3663135 discloses a retractable viewing device including a base, a shaft and a viewing assembly rotatably attached to the shaft. The viewing assembly includes an upper housing and a lower housing, a viewing unit such as a camera, and an electric retracting unit having a casing, a motor arranged in the casing, and a transmission. The lower housing of the viewing assembly is recessed to be fitted to the base and is configured to attach the camera.

Known prior art peripheral functional assemblies have been shown to be complex and costly. A need still exists for an improved peripheral functional assembly which at least partially overcomes the above issues.

### SUMMARY

The above disadvantages are overcome by the present peripheral functional assembly for vehicles with which important benefits are also obtained.

The present peripheral functional assembly for motor vehicles comprises a base bracket to be fixedly attached to a motor vehicle and an electric actuator assembly that is pivotally mounted to the base bracket. The electric actuator assembly comprises driving means for pivoting to the base bracket. The driving means are thus intended for driving the electric actuator assembly in rotation relative to the base bracket that is attached to a motor vehicle. Although the driving means are preferably motor driven, may other types of means for pivoting the actuator assembly to the base bracket are possible, even manually operated.

The electric actuator assembly of the present peripheral functional assembly further comprises a cover assembly. The cover assembly is arranged enclosing the driving means immediately adjacent said driving means. In addition, the cover assembly is also configured for supporting a functional element.

Within the meaning of the present disclosure, a functional element refers to any element intended for performing a specific function, such as an electrical device, for example, a mirror, a video camera, a photo camera, a light, a blinker, a radar, a LIDAR, and so forth.

Also within the meaning of the present disclosure, the arrangement of the cover assembly immediately adjacent the driving means should be understood as the cover assembly being adjoining at least one part of the driving means, that is, with said elements being next arranged close or next to one another. The cover assembly is thus arranged contiguous, near or directly adjacent to the driving means, for example sharing a common border, wall or boundary. However, it is to be understood that immediately adjacent does not necessarily involve direct contact between the parts.

According to the configuration described above, the cover assembly is configured for enclosing the driving means, i.e. for integrating the electric actuator assembly therein, and, at the same time, for supporting a functional element such as an electrical device, for example, a mirror, a camera, a radar, a LIDAR, etc.

The functional element may be arranged at least partially covered by or supported on the cover assembly. The functional element may be arranged resting on the cover assembly. Other examples are envisaged for integration of the functional element with the cover assembly.

The cover assembly may comprise at least a first cover, and a second cover. At least one of the first cover or the second cover is intended to receive the functional element supported therewith. At least one of the first cover or the second cover is stiffer than the other cover. Preferably, the cover intended to support the functional element is stiffer than the other cover.

The cover assembly may be provided with an extension where the functional element is supported. Said extension may be integrally formed with at least one of the first cover or the second cover or it may be removably formed with at least one of the first cover or the second cover.

The extension may be configured for performing the function of receiving the functional element, without enclosing the driving means.

It is preferred that the first cover is at least 30% longer than the second cover, even more than 40%. However, there might be cases where the first cover is 10-20% longer than the second cover. In any case, the first cover may protrude in a driving position from the second cover away from the vehicle, transversely to a direction of travel.

At least one of the first cover or the second cover may be countershaped to at least one portion of the driving means.

The base bracket is associated with a shaft. The shaft may be fixed to or be made integral with the base bracket. In some examples, the shaft may be divided into at least two sections one of which may be made integral with the base bracket. The shaft may have a hollow end positioned distal to the base bracket. At least one of the first cover or the second cover may surround the shaft externally or be internally arranged thereto. When the shaft is surrounded externally the shaft may protrude over the first or second cover. The at least one of the first or the second cover may have a downward projection for surrounding the shaft externally or arranged internally thereto arranged overlapping the shaft. This downward projection allows the electrical actuator to move along the shaft and serves as a guide during that movement. The length of the downward projection that overlaps the shaft is more than 2 mm, preferably more than 3 mm and optimally more than 5 mm.

The base bracket is attached to the shaft and the first cover is coupled to the second cover.

In the event that the shaft, as stated above, includes at least two sections, they may be attached to each other through a screw. Other alternative attaching means for attaching the shaft sections are possible such as a rivet, glue, welding, etc.

With the shaft comprising at least two sections, the assembly process can be advantageously automated avoiding handling a lot of pieces during the final assembly of the peripheral function assembly or the vehicle. In use, one section of the shaft is arranged within the cover assembly together with the driving means. The actuator assembly with the cover assembly and the driving means can be thus assembled together with one shaft section and coupled to the base bracket.

The present peripheral functional assembly may further include a plug for covering the hollow end of the base bracket shaft or the downward projection arranged internally to the base bracket shaft. The plug is intended to prevent dust and moisture from entering the assembly. The plug may be provided with a fastener for fixing cables over the shaft for ensuring that the cables passing through the center of the shaft are held properly in position.

A series of ramps are associated with or be fixedly attached to the upper surface of the base bracket. No relative movement between the ramps and the base bracket and between the shaft and the base bracket exists. Said ramps may be attached to the upper surface of the base bracket or formed integrally therein. Said ramps associated with the upper surface of the base bracket are arranged such that, in use, interact with a series of ramps formed in a lower surface of the cover assembly and/or with further ramps formed in the driving means. The ramps allow the actuator to be moved along the shaft while rotating around the shaft.

Some aspects, embodiments, or examples of the present peripheral functional assembly are set forth in the following clauses.
1. Peripheral functional assembly for motor vehicles, the peripheral functional assembly comprising a base bracket to be fixedly attached to a motor vehicle; and an electric actuator assembly pivotally mounted to the base bracket, the electric actuator assembly comprising driving means for pivoting to the base bracket and a cover assembly; wherein the cover assembly is arranged enclosing the driving means immediately adjacent said driving means, and wherein the cover assembly is arranged to surround externally a shaft associated with the base bracket or be received therein.
2. The assembly of clause 1, wherein the cover assembly has a projection arranged to surround externally the shaft associated with the base bracket or be received therein.
3. The assembly of clause 1 or 2, wherein the cover assembly comprises at least a first cover and a second cover.
4. The assembly of any of the preceding clauses, wherein the cover assembly also supports a functional element.
5. The assembly of any of the preceding clauses, wherein the cover assembly has an extension for supporting the functional element.
6. The assembly of any of clauses 3-5, wherein the first cover is at least 30% longer than the second cover.
7. The assembly of any of clauses 3-6, wherein at least one of the first cover or the second cover is countershaped to at least one portion of the driving means.
8. The assembly of any of clauses 2-7, wherein it further includes a plug for covering a hollow end of the base bracket shaft or the projection arranged internally to the base bracket shaft.
9. The assembly of clause 8, wherein the plug has a fastener for fixing cables passing over the base bracket shaft.
10. The assembly of any of clauses 1-9, wherein the base bracket shaft is divided into at least two sections.
11. The assembly of any of the preceding clauses, wherein the shaft is made integral with the base bracket.
12. The assembly of any of the preceding clauses, wherein it comprises a series of ramps formed in an upper surface of the base bracket which in use interact with a series of ramps formed in a lower surface of the cover assembly.
13. The assembly (100) of any of clauses 3-12, wherein at least one of the first cover or the second cover is stiffer than the other cover.
14. The assembly (100) of any of clauses 2-13, wherein the projection overlaps the shaft.
15. The assembly (100) of clause 14, wherein the length of the projection that overlaps the shaft is more than 2 mm.

Still further aspects, embodiments, or examples of the present peripheral functional assembly are set forth in the following clauses.
1. Peripheral functional assembly for motor vehicles, the peripheral functional assembly comprising a base bracket to be fixedly attached to a motor vehicle; and an electric actuator assembly pivotally mounted to the base bracket, the electric actuator assembly comprising driving means for pivoting to the base bracket and a cover assembly; wherein the cover assembly is arranged enclosing the driving means immediately adjacent said driving means, and wherein it further includes a plug for covering the hollow end of the base bracket shaft.
2. The assembly of clause 1, wherein the plug has a fastener for fixing cables passing over the base bracket.
3. The assembly of clause 1 or 2, wherein the cover assembly comprises at least a first cover and a second cover.
4. The assembly of any of the preceding clauses, wherein the cover assembly also supports a functional element.
5. The assembly of any of the preceding clauses, wherein the cover assembly has an extension where the functional element is supported on or integrally formed with or removably formed with.
6. The assembly of any of clauses 3-5, wherein the first cover is at least 30% longer than the second cover.
7. The assembly of any of clauses 3-6, wherein at least one of the first cover or the second cover is countershaped to at least one portion of the driving means.
8. The assembly of any of the clauses 1-7, wherein the base bracket shaft is divided into at least two sections.
9. The assembly of any of the preceding clauses, wherein the shaft is made integral with the base bracket.
10. The assembly of any of the preceding clauses, wherein it comprises a series of ramps formed in an upper surface of the base bracket which in use interact with a series of ramps formed in a lower surface of the cover assembly.
11. The assembly (100) of any of clauses 3-10, wherein the first cover has a higher stiffness than the second cover.
12. The assembly (100) of any clauses 2-10, wherein the fastener ensures that the cables passing through the center of the shaft are held properly in position.

Other aspects, embodiments, or examples of the present peripheral functional assembly are also set forth in the following clauses.
1. Peripheral functional assembly for motor vehicles, the peripheral functional assembly comprising a base bracket to be fixedly attached to a motor vehicle; and an electric actuator assembly pivotally mounted to the base bracket, the electric actuator assembly comprising driving means for pivoting to the base bracket and a cover assembly; wherein the cover assembly is arranged enclosing the driving means immediately adjacent said driving means, and wherein a shaft is associated with the base bracket comprising at least two sections arranged to be inserted into one another.
2. The assembly of clause 1, wherein the shaft is made integral with the base bracket.
3. The assembly of clause 1 or 2, wherein the cover assembly comprises at least a first cover and a second cover.
4. The assembly of any of the preceding clauses, wherein a functional element is supported on or integrally formed with or removably formed with the cover assembly.
5. The assembly of any of the preceding, wherein the cover assembly has an extension for supporting the functional element.
6. The assembly of any of clauses 3-5, wherein the first cover is at least 30% longer than the second cover.
7. The assembly of any of clauses 3-6, wherein at least one of the first cover or the second cover is countershaped to at least one portion of the driving means.
8. The assembly of any preceding claims, wherein the cover assembly has a projection arranged to surround externally the shaft associated with the base bracket or be received therein.
9. The assembly of clause 8, wherein it further includes a plug for covering a hollow end of the base bracket shaft or the projection arranged internally to the base bracket shaft.
10. The assembly of clause 9, wherein the plug has a fastener for fixing cables passing over the base bracket shaft.
11. The assembly of any of the preceding clauses, wherein it comprises a series of ramps formed in an upper surface of the base bracket which in use interact with a series of ramps formed in a lower surface of the cover assembly.
12. The assembly (100) of any of clauses 3-11, wherein at least one of the first cover or the second cover is stiffer than the other cover.

Still further aspects, embodiments, or examples of the present peripheral functional assembly are set forth in the following clauses.
1. Peripheral functional assembly for motor vehicles, the peripheral functional assembly comprising a base bracket to be fixedly attached to a motor vehicle; and an electric actuator assembly pivotally mounted to the base bracket, the electric actuator assembly comprising driving means for pivoting to the base bracket and a cover assembly; wherein the cover assembly is arranged enclosing the driving means immediately adjacent said driving means, and wherein a shaft is associated the base bracket comprising at least two sections at least one of which sections is made integral with the base bracket.
2. The assembly of clause 1, wherein the at least two sections are arranged to be inserted into one another.
3. The assembly of clause 1 or 2, wherein the cover assembly comprises at least a first cover and a second cover.
4. The assembly of any of the preceding clauses, wherein a functional element is supported on or integrally formed with or removably formed with the cover assembly.
5. The assembly of any of the preceding, wherein the cover assembly has an extension for supporting the functional element.
6. The assembly of any of clauses 3-5, wherein the first cover is at least 30% longer than the second cover.
7. The assembly of any of clauses 3-6, wherein at least one of the first cover or the second cover is countershaped to at least one portion of the driving means.
8. The assembly of any preceding claims, wherein the cover assembly has a projection arranged to surround externally the shaft associated with the base bracket or be received therein.
9. The assembly of clause 8, wherein it further includes a plug for covering a hollow end of the base bracket shaft or the projection arranged internally to the base bracket shaft.
10. The assembly of clause 9, wherein the plug has a fastener for fixing cables passing over the base bracket shaft.
11. The assembly of any of the preceding clauses, wherein it comprises a series of ramps formed in an upper surface of the base bracket which in use interact with a series of ramps formed in a lower surface of the cover assembly.
12. The assembly (100) of any of clauses 3-11, wherein at least one of the first cover or the second cover is stiffer than the other cover.

A small structural volume, simple structure is achieved with the cover assembly described above, since the cover assembly acts as functional element integrator without any accessory parts. No extra frame parts are required for supporting the functional element on the peripheral function assembly. As a result, a cost effective assembly is achieved.

Additional objects, advantages and features of examples of the present peripheral functional assembly for motor vehicles will become apparent to those skilled in the art upon examination of the description or may be learned by practice thereof.

### BRIEF DESCRIPTION OF THE DRAWINGS

Particular examples of a peripheral functional assembly for motor vehicles will be described in the following by way of non-limiting examples, with reference to the appended drawings.

In the drawings:
Figure 1 is an exploded perspective view of a first example of the present peripheral functional assembly for motor vehicles with a shaft formed with two sections;
Figure 2 is a perspective view of the housing bracket of the peripheral functional assembly shown in figure 1;
Figure 3 is a perspective view of the electric actuator assembly of the peripheral functional assembly in figures 1 and 2 shown without the first cover;
Figure 4 is a perspective view of the second cover of the electric actuator assembly in figure 3 shown from the bottom;
Figure 5 is a perspective view of the base bracket with the first example of the shaft formed with two sections;
Figure 6 is a perspective view of the base bracket with a second example of the shaft formed with a single section;
Figure 7 is a cross-sectional view of the present peripheral functional assembly using the first example, with both sections of the shaft attached through a screw; and
Figure 8 is a cross-sectional view of the present peripheral functional assembly of the second example.

### DETAILED DESCRIPTION OF EXAMPLES

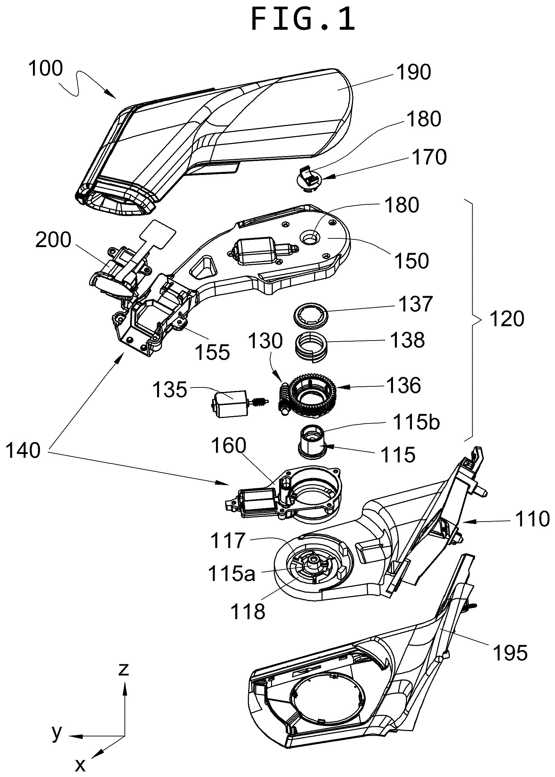

Examples of a peripheral functional assembly 100 will be described in the following according to the figures 1-8 of the drawings.

The peripheral functional assembly 100 that is described herein comprises a base bracket 110. The base bracket 110 is fixedly attached to a motor vehicle, not shown.

The peripheral functional assembly 100 further comprises an electric actuator assembly 120 that is pivotally mounted to the base bracket 110 through a shaft 115 that is fixedly attached to the base bracket 110. The electric actuator assembly 120 comprises driving means 130 for causing the actuator assembly 120 itself to pivot relative to the base bracket 110 around said shaft 115.

The driving means 130 are enclosed within a cover assembly 140. The cover assembly 140 is arranged immediately adjacent the driving means 130, that is, adjoining at least one of a motor 135 or a transmission 136 of the driving means 130.

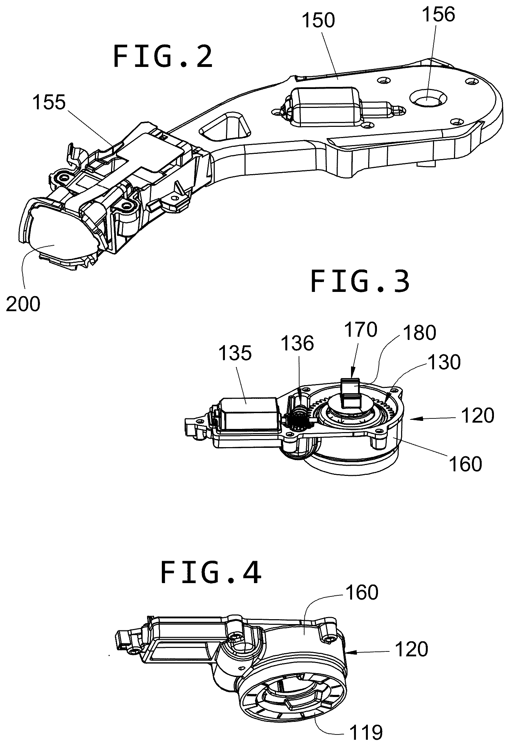

The actuator assembly 120 can be moved along an axis z as shown in figure 1 through ramps 118, 119 which will be described further below in connection with figures 4, 7, 8 of the drawings. Such movement of the actuator assembly 120 along an axis z is controlled by a spring 138 and is locked by a lock washer 137 shown in figure 1. The actuator assembly 120 can be also rotated around the above mentioned shaft 115 which will be also described further below.

The cover assembly 140, in addition of performing the function of housing, receiving, and enclosing the driving means 130 including the motor 135 and the transmission 136, it is also configured for supporting a functional element 200.

The functional element 200 may be, for example, a mirror, an electrical device, such as a video camera, a photo camera, a light, a blinker, a radar, a LIDAR, etc, and in general any element intended for performing a specific function. The cover assembly 140 thus integrates the electric actuator assembly 120 therein and also the functional element 200. In the example shown, the functional element 200 is supported on the cover assembly 140.

As shown in the figures, the cover assembly 140 comprises a first cover or upper cover, also referred herein to as housing bracket 150, and a second cover or lower cover 160. In this non-limiting example, the housing bracket 150 is intended to receive the functional element 200 supported therewith. For this purpose, the housing bracket 150 is stiffer than the lower cover 160. Examples of ways for stiffening the housing bracket 150 may be providing stiffening elements such as ribs, ridges, etc.; increasing the thickness of the housing bracket 150 with respect to the lower cover, or selecting stiffer materials such as a metal, for example aluminium, magnesium or Zamak alloys, or a reinforced plastic material. The spring 138 is arranged to bias the lower cover 160 to the base bracket 110.

The housing bracket 150 of the cover assembly has an extension 155 formed integrally therewith in the example shown. One free end of the extension 155 of the housing bracket 150 is adapted to support the functional element 200. The resulting configuration is such that the housing bracket 150 protrudes from the lower cover 160 away from the vehicle in a driving position, in a direction y depicted in figure 1, transversely to a direction of travel, opposite to direction x depicted in figure 1. Thus, the housing bracket 150 is at least 30% longer than the lower cover 160, as illustrated in the figures of the drawings.

The housing bracket 150 is countershaped to the driving means 130 for example countershaped to at least one of the motor 135 or the transmission 136.

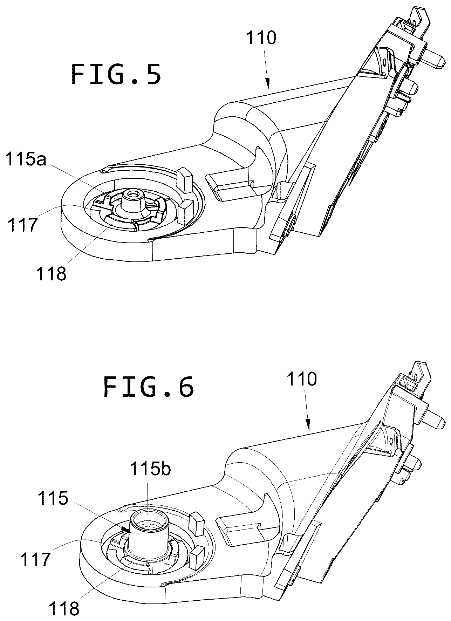

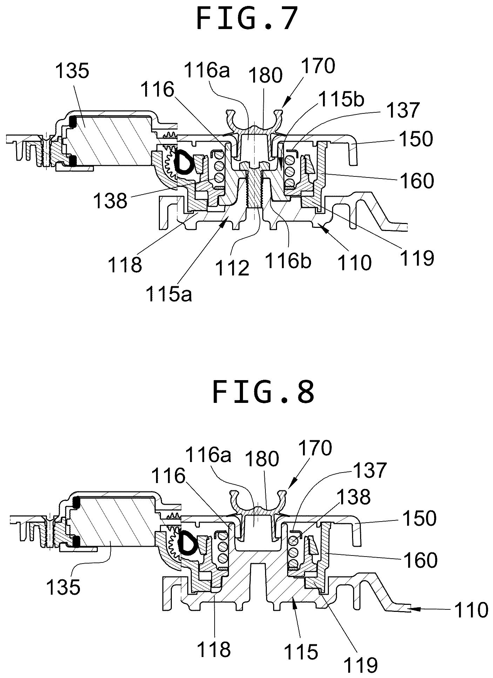

As described above, a shaft 115 is associated with base bracket 110. In a first example shown in figures 1, 5 and 7 the shaft 115 is divided into a first shaft section 115a and a second shaft section 115b, wherein the first shaft section 115a is the part attached to the base bracket 110, in the example integral to the base bracket 110. In second example shown in figures 6 and 8, the shaft 115 has a single shaft section, in the example the single shaft section is made integral with the base bracket 110.

The first shaft section 115a is attached to the base bracket 110. The first shaft section 115a is also attached to the second shaft section 115b that in use is inserted into a cavity 116b formed therein. The second shaft section 115b has a recess 116a that is formed in a distal end thereof. The recess 116a is intended for receiving therein a plug 170, which will be described further below.

The base bracket 110 has a projection 156 arranged surrounding the shaft 115 externally or being arranged internally thereto. In the example, the projection 156 is arranged internally in the recess 116a. This projection 156 helps in guiding the electric actuator assembly 120 as it is displaced axially along the shaft 115 according to axis z shown in figure 1.

As stated above plug 170 is provided for covering said cavity 116a that is formed in a hollow end 116 of the shaft 115 fixedly attached to the base bracket 110 in order to protect the assembly 100 from dust and moisture. The plug 170 may also be placed within the projection 156 when the projection 156 arranged internally the recess 116a of the shaft 115. The plug 170 is provided with a fastener 180 for fixing cables over a central part of the shaft 115. This avoids cables to be stretched or shrunk as the electric actuator assembly 120 is pivoted to the base bracket 110 during operation.

The base bracket 110 has an upper surface 117 with a series of ramps 118 formed thereon. The ramps 118 are arranged such that, in use, interact with a series of ramps 119 formed in a lower surface of the cover assembly 140 as shown in figures 4, 7, 8 of the drawings and/or with other series or ramps formed in the driving means 130.

In the first example, when the shaft 115 is divided in two sections 115a, 115b, the first shaft section 115a is made integral with the base bracket 110 and the second shaft section 115b is attached to the first shaft section 115a through a screw 112. The first shaft section 115a is inserted into the second shaft section 115b. This results in a stiffer shaft 115.

A top cover cap 190 and a bottom cover cap 195 are provided for receiving therein the peripheral functional assembly 100 as shown in figure 1.

Although only a number of particular embodiments and examples of the present winglet assembly for motor vehicles have been disclosed herein, it will be understood by those skilled in the art that other alternative examples and/or uses and obvious modifications and equivalents thereof are possible. The present disclosure covers all possible combinations of the particular examples described.

The use of terms "first", "second", etc. for indicating different parts does not involve any order and does not necessarily exclude other further parts. Reference signs related to drawings and placed in parentheses in a claim, are solely for attempting to increase the intelligibility of the claim, and shall not be construed as limiting the scope of the claim.

The scope of the present disclosure should not be limited by particular examples, but should be determined only by a fair reading of the claims that follow.

## Claims

1. Peripheral functional assembly (100) for motor vehicles, the peripheral functional assembly (100) comprising:
- a base bracket (110) to be fixedly attached to a motor vehicle, including a shaft (115) having at least one hollow end (116); and
- an actuator assembly (120) pivotally mounted to the base bracket (110);
wherein the peripheral functional assembly (100) further includes a plug (170) for covering the hollow end (116) of the base bracket shaft (115).

2. Peripheral functional assembly (100) for motor vehicles, the peripheral functional assembly (100) comprising:
- a base bracket (110) to be fixedly attached to a motor vehicle, including a shaft (115) having at least one hollow end (116); and
- an electric actuator assembly (120) pivotally mounted to the base bracket (110), the electric actuator assembly (120) comprising:
- driving means (130),
- a cover assembly (140) having a downward projection (156) surrounding the shaft (115) externally or arranged internally thereto;
**characterized in that** it further includes a plug (170) for covering the downward projection (156).

3. The assembly (100) of claim 2, wherein the downward projection (156) is arranged overlapping the shaft (115).

4. The assembly (100) of claim 3, wherein the length of the downward projection that overlaps the shaft is more than 2 mm, preferably more than 3 mm and optimally more than 5 mm.

5. The assembly (100) of any preceding claim, wherein the plug (170) has a fastener for fixing cables passing over the base bracket (110) for ensuring that the cables passing through the center of the shaft are held properly in position.

6. The assembly (100) of any preceding claim, wherein the cover assembly (140) comprises at least a first cover (150) and a second cover (160), and wherein the cover assembly (140) is configured for supporting a functional element (200).

7. The assembly (100) of claim 6, wherein the cover assembly (140) has an extension (155) where the functional element (200) is supported.

8. The assembly (100) of claim 7, wherein the extension (155) is integrally formed with at least one of the first cover (150) or the second cover (160).

9. The assembly (100) of claim 7, wherein the extension (155) is removably formed with at least one of the first cover (150) or the second cover (160).

10. The assembly (100) of any of claims 6-9, wherein the first cover (150) is at least 30% longer than the second cover (150).

11. The assembly (100) of any of claims 6-10, wherein at least one of the first cover (150) or the second cover (160) is countershaped to at least one portion of the driving means (130).

12. The assembly (100) of any preceding claim, wherein the base bracket shaft (115) is divided into at least two sections (115a, 115b).

13. The assembly (100) of any preceding claim, wherein the shaft (115) is made integral with the base bracket (110).

14. The assembly (100) of any of the preceding claims, wherein it comprises a series of ramps (118) formed in an upper surface (117) of the base bracket (110) which in use interact with a series of ramps (119) formed in a lower surface of the cover assembly (140).

15. The assembly (100) of any of claims 6-14, wherein at least one of the first cover (150) or the second cover (160) is stiffer than the other cover.
